# EUROPEAN PATENT SPECIFICATION

(11) **EP 1 745 685 B1**
(45) Date of publication and mention of the grant of the patent: **25.06.2008**
(21) Application number: 06014666.9
(22) Date of filing: 14.07.2006
(51) Int. Cl.: A01B 59/04

(54) **Device for the lateral stabilization of a tractor implement linkage**
Vorrichtung zur Seitenstabilisierung der Unterlenker eines Ackerschleppers
Dispositif pour la stabilisation latéral des bras d'attelage inférieurs d'un tracteur

(30) Priority: 19.07.2005 DE 202005011305 U
(43) Date of publication of application: 24.01.2007
(73) Proprietor: AGCO GmbH, 87616 Marktoberdorf (DE)
(72) Inventor: Stich, Ulrich, 86869 Oberostendorf (DE)
(74) Representative: Morrall, Roger

(56) References cited:
- DE-A1- 3 339 060
- DE-A1- 4 208 985
- GB-A- 1 203 345

## Description

The invention relates to a device for the lateral stabilization of the two lift arms of an implement mounting linkage of an agricultural tractor, wherein the liftarms are each provided with a support strut, which is connected by means of a pivot bolt to a pivoting pivot arm mounted on a bracket secured to the vehicle, the pivot arm interacts with a stop disc, which is adjustable manually between a locked position in which a first stop element on the disc has the effect of lateral stabilization of the implement from a central position, and an unlocked position, in which a second stop element on the disc suspends the lateral stabilization, and wherein with the stop in the locked position an implement carried by the lift arms is stabilized centrally to the tractor in all vertical positions, and with the stop in the unlocking position and the lift arms in a lowered position the implement is not stabilized but in a fully raised position is stabilized centrally to the tractor by the movement of the pivot arms into a predetermined pivot position by the support struts.

With a device of this type used by Applicants themselves, a separate bracket secured on the vehicle is allocated to each one of the lift arms. The liftarms are capable of being raised and lowered by means of a powered lifting device. On each bracket is mounted a pivot arm so as to rotate about an axis running transverse to the longitudinal direction of the vehicle. A support strut engages laterally the lift arm and is mounted in its end position on the vehicle on the pivot arm by means of a ball joint. When the lift arm is deflected sideways out of its spring-centred central position, the front end of the support strut moves in the longitudinal direction of the vehicle, as a result of which the pivot arm is pivoted to and fro. In order to render the lateral stabilization effective or ineffective, a manually-adjustable stop disk is provided, which in turn is provided with two stops capable of being placed into the movement path of the pivot arm.

In a first position of the stop disc, in which the lateral stabilization is effective, a first stop on the disc is effective which allows for the maximum pivoting of the pivot arm only as far as a middle position. This means that in the first position of the stop disc each lift arm can pivot out of its spring centred central position to the inner side of the vehicle, but not to the outer side of the vehicle. Because both the lift arms are connected to one another by means of the implement which is supported, the implement is accordingly centred relative to the tractor and stabilized. This stabilization continues to be retained when the device is raised into its upper transport position by means of the powered lifting device.

In the other position of the stop disk, in which lateral stabilization is ineffective, the second stop allows for a maximum pivoting of the pivot arm on both sides of the middle position. This means that in the second position of the stop disc each lift arm can be pivoted out of its spring centred central position both to the outer side of the vehicle as well as to the inner side. The implement is accordingly freely movable laterally, within specified limits, and remains freely movable even if it is raised almost as far as into its upper transport position. In order for the implement to be laterally stabilized at least in the upper transport position, which is essential for transport journeys, a stop is provided at the pivot arm, which the support strut comes in contact shortly before the device reaches the upper transport position. If the device is raised still higher, the support strut pivots the pivot arm into the middle position referred to, so that, on reaching the transport position, the device is laterally stabilized. A disadvantage in this situation, however, is that the support struts are not sufficiently guided by the ball joint and often impinge on the stops of the pivot arms tilted at an angle. This results in considerable wear not only on the support struts but also on the stops.

There is an increasing tendency for tractors with non-sprung rear axles which are to travel at higher speeds to be fitted with powered lifting devices with active vibration damping in order to avoid dangerous nodding vibrations induced by the implement being carried. These powered lifting devices reduce nodding vibrations by the implement being actively moved in counter-phase to the vibration movement of the rear of the vehicle. The use of vibration dampers of this kind necessarily requires, however, that the implement be adequately secured to the vehicle not only in the transport position but over the entire movement range of the lift arms used for the active vibration damping. With the known device, referred to above, this is the case when the device is operated with effective lateral stabilization. However, if the device is operated without lateral stabilization, the driver is compelled to leave the driver's position and to render the lateral stabilization effective at the brackets.

A similar device with the features of the preamble of claim 1 is known from GB-A-1 203 345.

The object of the invention is to provide a device for the mechanical lateral stabilization of the two lift arms of an implement mounting linkage of an agricultural tractor which, at the end of operational use with the lateral stabilization of the lift arms or the implement not in effect, saves the driver the trouble of leaving the driver's position in order to render the lateral stabilization effective.

To achieve this object, it is proposed that each support strut is extended beyond the pivot bolt, and that the extension is joined to a link, the link having a first formation which engages a second formation secured to the bracket so that with the stop disc pivoted into the unlocked position, at a predetermined raising height of the lift arms and the support struts (22) below the fully raised position, a stop formed on the link comes into contact with the second formation thus stabilizing the implement against movements out of the central position.

In the above arrangement, it is possible for the linkage to be arranged not to begin to be stabilized laterally until the implement is almost fully raised, but to arrange to initiate the stabilization procedure at lower raising positions of the implement. As a result of this the pivot range in which the lift arms and the implement are restricted in their sideways movement and are therefore stabilized, is substantially extended. Within this pivot range, the restriction of the sideways movement of the lift arms is dependent on its raising angle and is not linear, as hitherto, but exponential. The sideways movement of the under struts is therefore already restricted, long before the maximum raising position is reached, so that the vehicle, after previous operation with lateral stabilization of the lift arms not in effect, can be operated in road travel with active vibration damping without the lateral stabilization being manually put into effect.

According to Claim 2, the device according to the invention no longer makes use of ball joints for the joint connection of the support struts to the pivot arms. Instead, the support struts are formed as two parts, and their constituent parts mounted on the pivot arms and connected to one another by cylindrical pivot bolts. The pivot parts are, as a result, guided relatively uninterrupted to the pivot arms, which makes the device to a high degree immune to wear.

In a further embodiment of the invention, the link is formed as a longitudinally extending slot of rectangular cross-section, and a block with square cross-section is rotatably mounted on the second formation. As a result, the block can be adjusted during the raising of the support struts to match the changing position of the link, and the block is only subjected to slight loading when it comes in contact with the link.

An embodiment of the invention is described in greater detail hereinafter by way of example only with reference to the accompanying drawings in which:-
- Fig. 1: is a plan view of the rear area of an agricultural tractor with an implement stabilization device having optionally effective or non-effective lateral stabilization of the lift arms,
- Fig. 2: is a side view of the rear area of the agricultural tractor according to Fig. 1,
- Fig. 3: is a first embodiment of the device, viewed on the left in the direction of travel, with lateral stabilization in effect and the support strut completely lowered,
- Fig. 4: is a side view of the device according to Fig. 3, with the support strut located in the middle height position,
- Fig. 5: is a side view of the device according to Fig. 3, with the support strut fully raised,
- Fig. 6: is a side view of the device according to Fig. 3, with lateral stabilization not in effect, wherein the support strut is completely lowered and the lift arm is pivoted inwards to the inner side of the vehicle,
- Fig. 7: is a side view of the device according to Fig. 6, with the lift arm pivoted outwards to the outer side of the vehicle,
- Fig. 8: is a side view of the device according to Fig. 6, with support struts located in the middle height position and the lift arm pivoted towards the inner side of the vehicle,
- Fig. 9: is a side view of the device according to Fig. 6, with support strut located in the middle height position and the lift arm pivoted towards the outer side of the vehicle,
- Fig. 10: is a side view of the device according to Fig. 6, with support strut between the middle height and fully raised positions,
- Fig. 11: a side view of the device according to Fig. 6, with support strut completely raised, and
- Fig. 12: A second embodiment of a device for lateral stabilization of the lift arms, with a different link construction.

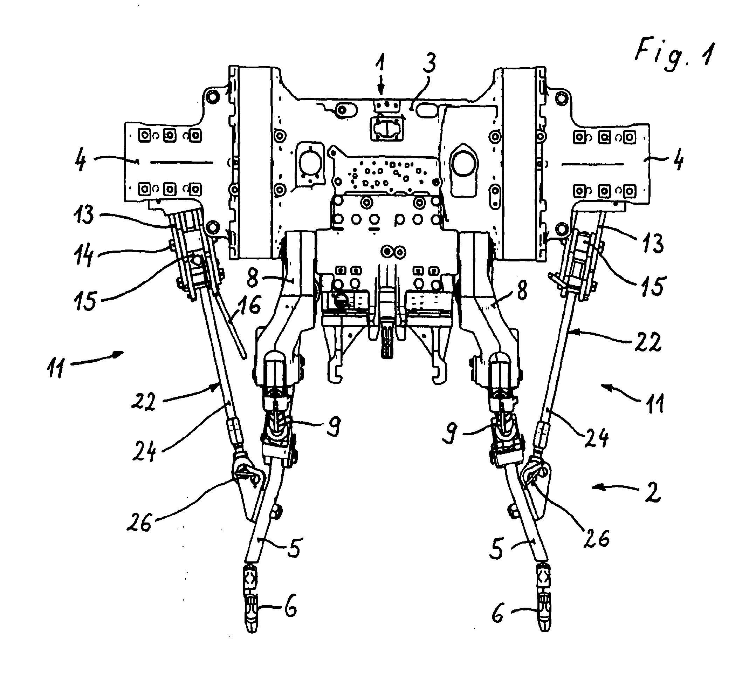

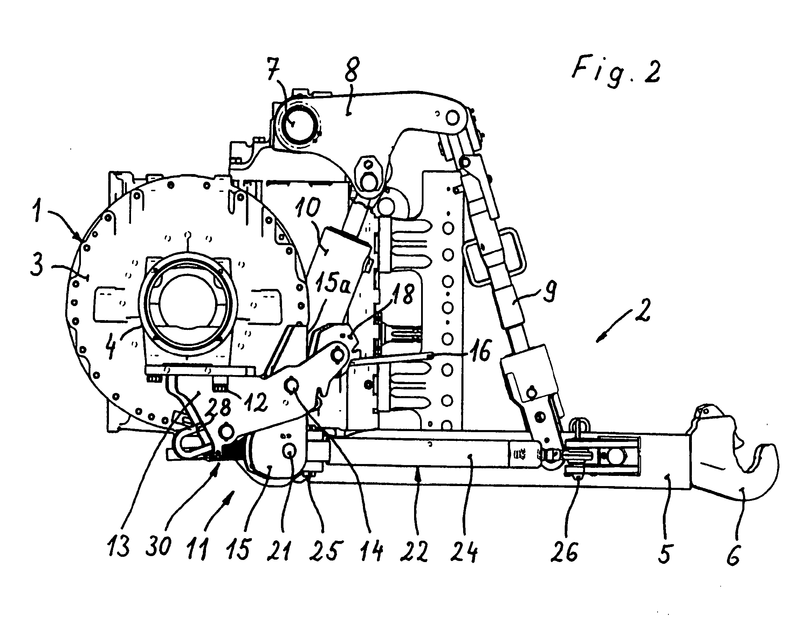

In Figs. 1 and 2 only the rear area of an agricultural tractor is shown, with the rear axle 1 and the implement mounting linkage 2. The rear axle 1 consists of a middle part 3 and two axle housing 4, on which the rear wheels of the vehicle, not shown, are mounted.

The implement mounting linkage 2 has two lift arms 5 which are mounted on the middle part 3 of the axle, which extend rearwards in respect of the normal direction of travel, and which at their free ends have hook elements 6 for the connection of an implement.

Rotatably mounted in the upper region of the middle part 3 of the axle is a raising shaft 7 which is connected to a powered raising device in the form of hydraulic cylinders 10 which are supplied with pressurised fluid by the hydraulic system of the vehicle. At the ends of shaft 7 are connected two raising arms 8 in a torsionally-resistant manner. The raising arms 8 are connected via raising struts 9 to the lift arms 5.

Thus with the aid of a powered raising device, the lift arms 5 and the implement connected to the hooks 6 can be adjusted between a fully lowered position and a fully raised position in the normal manner.

In the embodiment of the implement attachment device 2 described hitherto, the lift arms 5 can pivot at any height position about mounts on the middle part 3 of the axle. An implement which is being carried by the lift arms 5 will therefore be able to move to and fro during operation under the effect of transverse forces transverse to the direction of travel of the vehicle. This is desirable if, for example, a plough is involved. If other types of equipment are used, such as dung spreaders, for example, which are not intended to carry out any lateral movements in relation to the vehicle during operation, they must therefore be connected to the vehicle in a laterally stable manner.

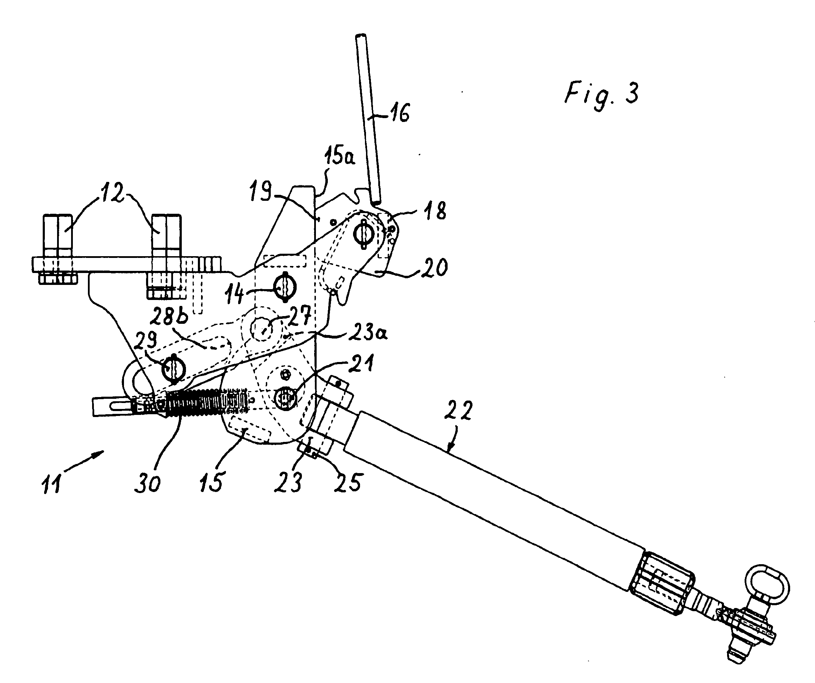

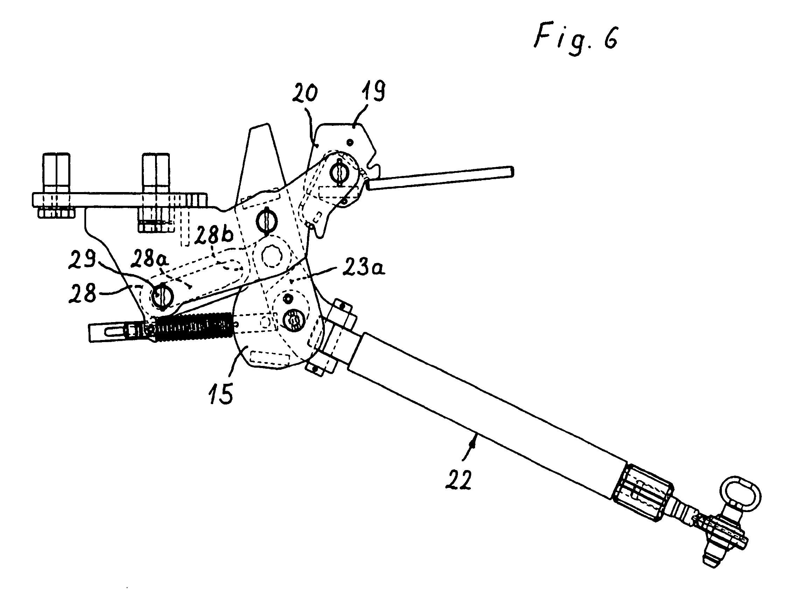

In order to fulfil this requirement, a device 11 is allocated to each of the two lift arms 5 to provide them with lateral stabilization. Both devices are of the same type, but constructed with the sides inverted. The device allocated to the lift arm 5 on the left, seen in the direction of travel, is described hereinafter. It consists of a bracket 13, located on the underside of the axle housing 4 by means of bolts 12, Mounted on bracket 13, as can be seen from the other Figures, is a double-armed pivot arm 15, mounted by means of a pivot bolt 14. The pivot arm 15 is provided above the bolt 14 with a stop surface 15a. In its path of movement is a stop disc 18, with two stops 19 and 20, which can be pivoted by means of a lever 16 and are held in the selected pivot position by means of a spring 17. The stop disc 18 can be pivoted into a locking position or an unlocking position, depending on whether lateral stabilization of the lift arms 5 is desired (see Fig. 3) or not (see Fig. 6), either the stop 19 or the stop 20 being inserted into the movement path of the stop surface 15a.

Provided beneath the bolt 14, at the pivot arm 15, is a cylindrical bolt 21, mounted on which is a support strut 22. The support strut 22 consists of a pivot part 23 and a rod 24, which are connected to each other by means of a bolt 25 lying in a vertical plane. Both bolts 21, 25 form in this situation a cross joint. The free end of the rod 24 is supported on the outside of the lift arm 5 by means of an alignment bolt 26. The pivot part 23 is provided with an extension 23a beyond the bolt 21, attached to which by a bolt 27 is a link 28. This link 28 has a longitudinal slot 28a with rounded end areas, through which a link bolt 29 engages, which is secured to bracket 13, and guides the link 28. The end of the slot 28a close to the bolt 27 is designed as a stop 28b which interacts with the link bolt 29. The extension 23a and the link 28 in this situation are arranged in the form of a toggle or knee joint.

Beneath the bolt 14 a spring arrangement 30 engages at the pivot arm 15, which arrangement holds the pivot arm 15 and the lift arm 5 connected to it centred in a middle position. This spring arrangement is described in DE 33 39 060 A1, and is not dealt with further at this juncture since it is not relevant to the present invention.

When the stop 19 is inserted in the path of arm 15, as shown in Fig. 3, the pivot arm 15 is not provided with the full pivot path, since the pivot arm 15 is already in contact with the stop 19 in its spring-centred middle position. This means that the left lift arm 5, moving out from the middle position shown and spring-centred, can only be moved in the direction of the right lift arm 5, i.e. towards the inner side of the vehicle. The support strut 22 in this situation moves to the rear in relation to the vehicle, and pivots the pivot arm 15 counter-clockwise away from the stop 19. Inasmuch as the same situation pertains with the device 11 for the lateral stabilization of the right lift arm 5, and this too is therefore only movable to the inner side of the vehicle, both under struts 5 are laterally stabilized, provided that they are connected to each other by an implement.

When the stop 20 is inserted in the path of arm 15, as shown in Fig. 6, the pivot arm 15 is provided with a maximum pivot path, because it can be pivoted outwards, over the spring-centred middle position in a clockwise direction, until it comes in contact with the stop 20. This means that the left lift arm 5, moving outwards from the spring-centred middle position shown, can be pivoted both to the outside of the vehicle as well as to the inside of the vehicle. The support strut 22 in this situation moves forwards and backwards respectively in relation to the vehicle. Inasmuch as the same situation also prevails in the case of the device 11 for the lateral stabilization of the right lift arm 5, and inasmuch as this too can therefore be moved to the outer side and inner side of the vehicle, an implement being carried by the lift arms 5 can swing sideways freely within the specified limits.

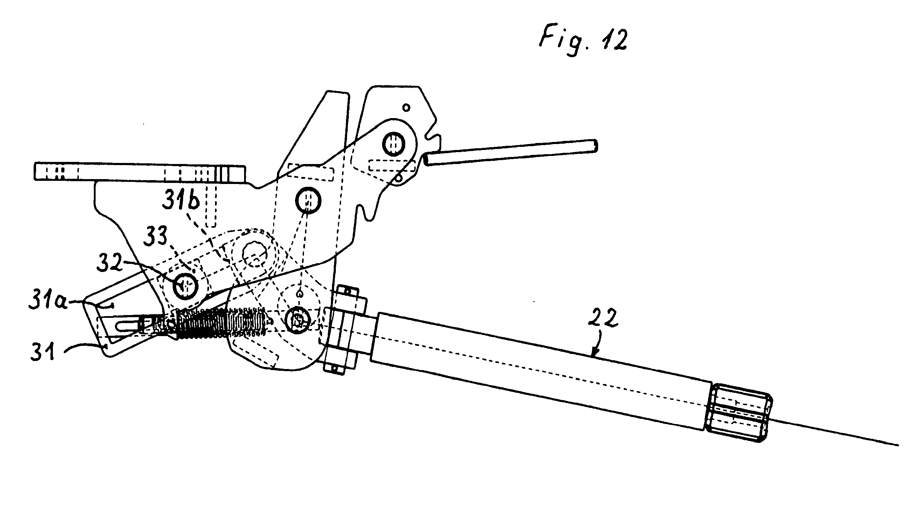

With the embodiment according to Fig. 12, the return rod 31 is provided with a rectangular slot 31a. The stop surface 31b formed on the link 31 is therefore flat. The link bolt 29 is replaced by a bolt 32, on which a stop block 33 is rotatably mounted, likewise with a flat counter surface.

The stabilization device operates as follows. To provide stabilization at all height positions the stop disc 18 is pivoted into the locking position corresponding to Figs. 3, 4 and 5, in which the stop 19 takes effect.

In Fig.3 the lift arm 5, and with it the support strut 22, are fully lowered. The extension 23a and link 28 form a right angle. The stop 28b formed on the link 28 is located at a greater distance from the link bolt 29.

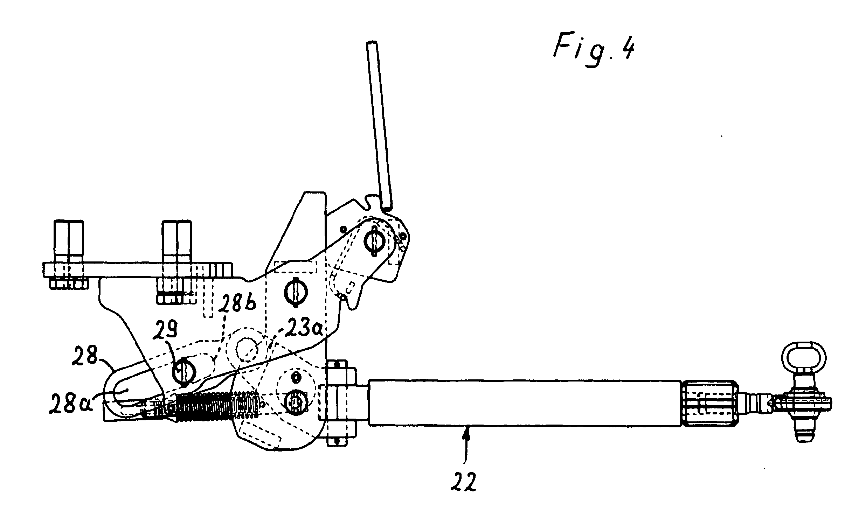

In Fig. 4, the support strut 22 is raised as far as the horizontal position. The extension 23a and link 28 form an obtuse angle. The stop 28b formed at the link 28 has approached the link bolt 29.

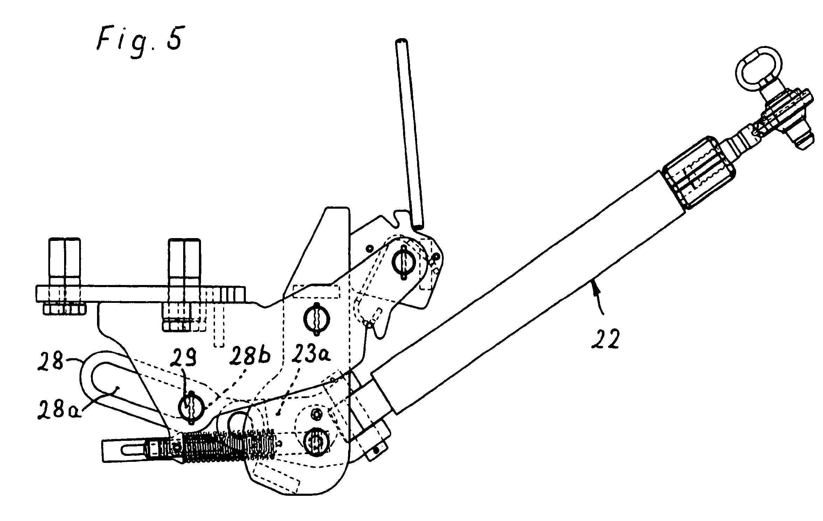

In Fig. 5, the support strut 22 is shown in the fully raised position of the lift arm 5. The extension 23a and link 28 are in the extended position. The stop 28b formed at the link 28 is in contact at the link bolt 29.

If the implement supported by lift arm 5 is not intended to be laterally stabilized the stop disc 18 according to Figs. 6 to 11 is pivoted into the unlocking position, in which the stop 20 is effective.

In Fig. 6 the lift arm 5, and with it the support strut 22, is fully lowered. The extension 23a and link 28 form a right angle. If the lift arm 5 is pivoted as far as possible from its spring-centred middle position to the inner side of the vehicle, then the support strut 22, moving backwards, pivots the pivot arm 15 as far as the pivot end position shown. The stop 28b formed on the link 28 is now located at the greatest possible distance from the link bolt 29. This position of the support strut 22 determines the length of the slot 28a.

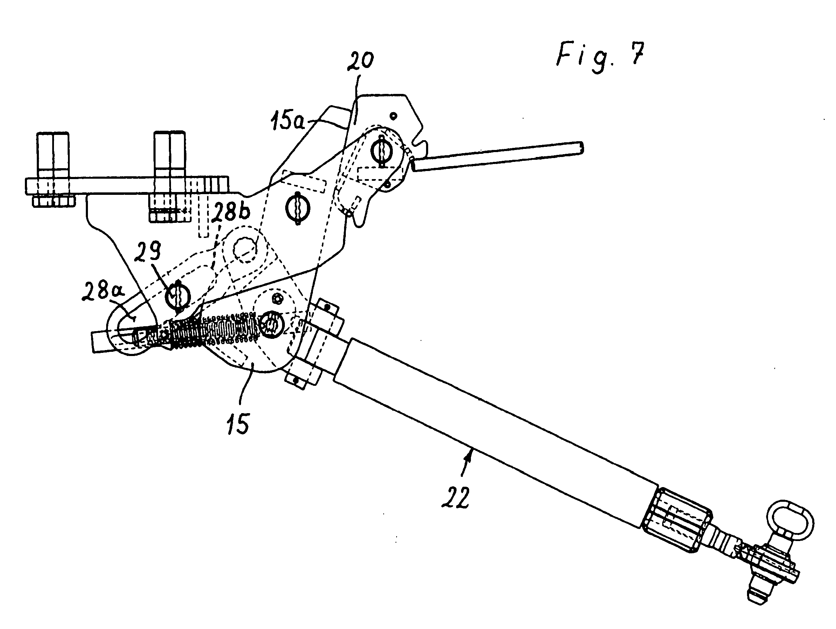

Fig. 7 corresponds essentially to Fig. 6, with the difference that the lift arm 5 is pivoted as far as possible out of its spring-centred middle position to the outer side of the vehicle. In this situation the support strut 22 which is moving forwards pivots the pivot arm 15 as far as the pivot end position shown, in which the stop surface 15a is in contact at the stop 20. The stop 28b formed on the link 28 is now located in closer proximity to the link bolt 29, without coming in contact with it.

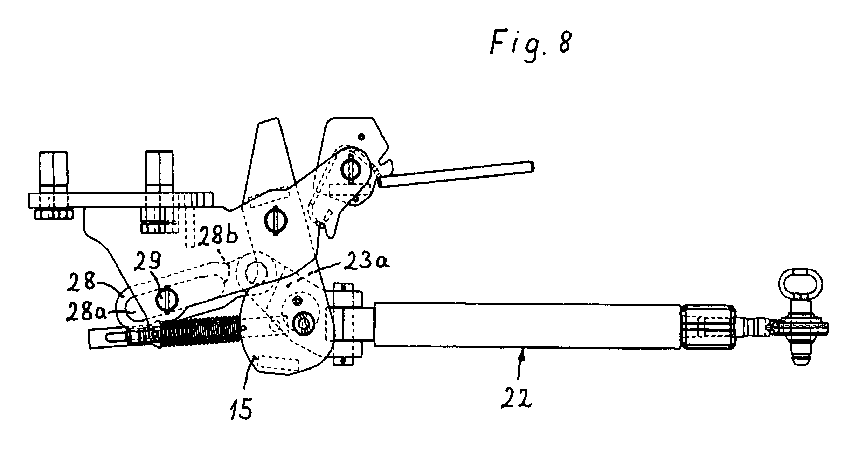

In Fig. 8 the lift arm 5, and with it the support strut 22, is at half the raising height. The extension 23a and the link 28 form an obtuse angle. When the lift arm 5 is pivoted as far as possible out of its spring-centred middle position to the inner side of the vehicle, the support strut 22, moving backwards, pivots the pivot arm 15 as far as the pivot end position shown. The stop 28b formed at the link 28 is now located at a short distance from the link bolt 29.

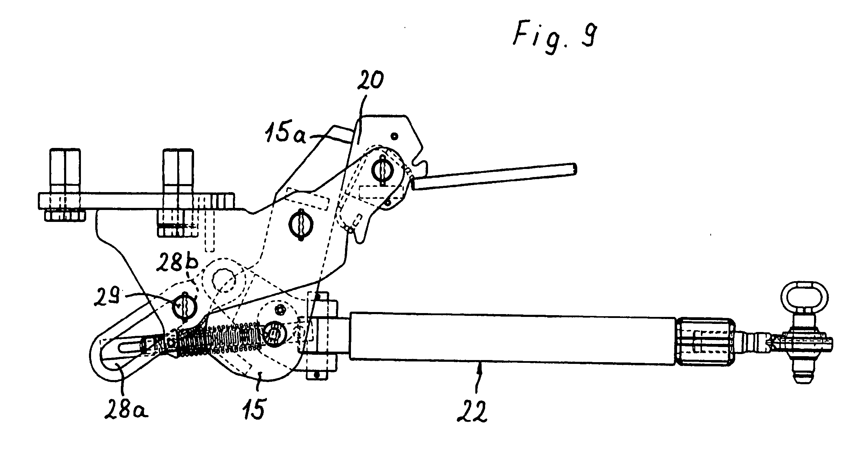

Fig. 9 corresponds essentially to Fig. 8, with the difference that the lift arm 5 is pivoted as far as possible out of its spring-centred middle position to the outer side of the vehicle. In this situation the support strut 22 which is moving forwards pivots the pivot arm 15 as far as the pivot end position shown, in which the stop surface 15a is in contact at the stop 20. The stop 28b formed at the link 28 is now located directly at the link bolt 29.

In the region between the raising positions of the lift arms 5 shown in Figs. 6 to 9, the equipment unit can be pivoted to the maximum within the limits determined. If the lift arm 5 is raised further, beyond the Figure 9 position its lateral displaceability will be increasingly restricted.

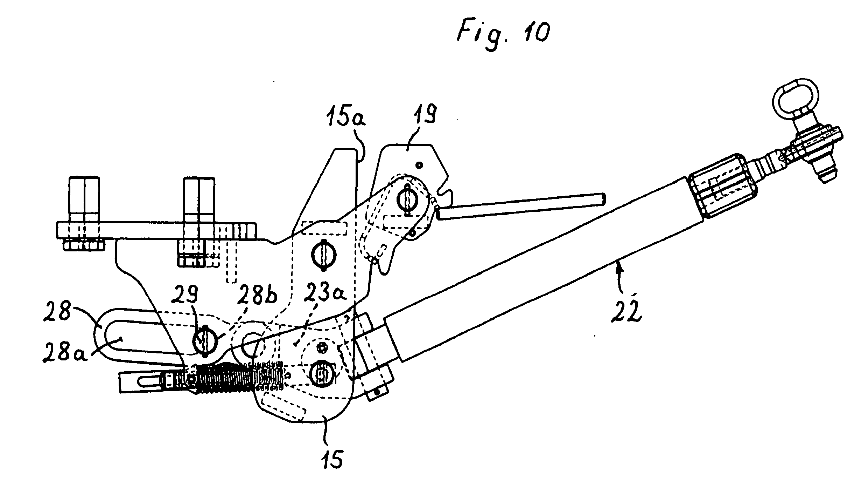

Fig. 10 shows the support strut 22 in a position between the half and the maximum raising height. In this position the bolt 29 contacts the stop 28b when the lift arm 5 and the associated strut 22 is in the spring-centred middle position so no sideways movement of any implement connected between the lift arms 5 is possible for all positions of the struts 22 above the Fig 10 position even though the stop 20 is effective.

It will also be noted that in the Figure 10 position the lever 15 is pivoted to the same vertical position it occupies when the contact surface 15a contacts the stop 19.

For strut positions between the Fig 9 and Fig 10 positions a reducing amount of sideways movement is possible as the strut is raised from the Fig 9 position to the Fig 10 position.

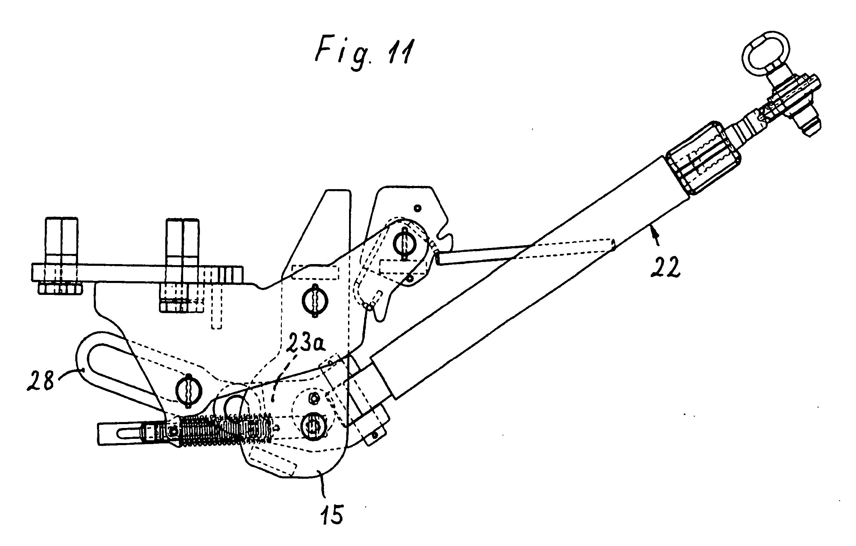

Fig. 11 shows the support strut 22 with the lift arm 5 fully raised. In this situation, the extension 23a and the link 28 adopt a slight extension position, without leading to a change in the pivot position of the pivot arm 15 in relation to the situation described in Fig. 10.

## Claims

1. A device for the lateral stabilization of the two liftarms (5) of the equipment mounting linkages (2) of an agricultural tractor, wherein the liftarms are each provided with a support strut (22) which is connected by means of a pivot bolt (21) to a pivoting pivot arm (15) mounted on a bracket (13) secured to the tractor, the pivot arm (15) interacting with a stop disc (18), which is adjustable manually between a locked position in which a one stop element (19) has the effect of lateral stabilization of an implement connected between the liftarms against movement away from a central position and an unlocked position in which a second stop (20) suspends the lateral stabilization of the implement and wherein with the stop (19) in the locked position stabilizes an implement, carried by the liftarms against movement from the central position in all vertical positions, and with the stop (20) in the unlocking position and the lift arms in a lowered position the implement is not stabilized but in a fully raised position of the lift arms the implement is stabilized against movement away from the central position **characterised in that** each support strut (22) has an extension (23a) which extends outwards beyond the pivot bolt (21) and the extension (23a) is joined to a link (28:31), **in that** the link (28;31) has a first formation (28a;31a) which engages a second formation (29,32) secured to the bracket, and **in that** with the stop disc (18) pivoted into the unlocked position, at a predetermined raising height of the lift arms (5) and the support struts (22) below the fully raised position , a stop (28b;31b) formed on the link (28;31) comes into contact with the second formation (29,32) thus stabilizing the implement against movements out of the central position.

2. A device according to Claim 1, **characterised in that** each support strut (22) consists of a pivot part (23) and a rod (24), wherein the pivot part (23) is mounted on the pivot arm (15) by means of a first cylindrical pivot bolt (21), and the rod (24) is connected to the pivot part (23) by means of a second cylindrical pivot bolt (25), and the pivot bolts (21;25) form a cross-joint.

3. A device according to claim 1 or 2 **characterised in that** the first formation (28a;31a) in the link (28;31) is formed as a longitudinally extending slot which receives within it the second formation (29;32) in the form of a pin mounted on the bracket (13) and the pin contacts on end 28b of the slot to stabilize the implement.

4. A device according to claim 3, **characterised in that** the slot (28a;31a) in the link (28,31) is formed with a square cross-section, and a contact block (33) with square cross-section is rotatably mounted on the pin (29;32) and slides in the slot (28a;31a).

## Patentansprüche

1. Einrichtung zur lateralen Stabilisierung von zwei Liftarmen (5) von Verbindungen (2) zur Befestigung von Ausrüstungen, Zubehör oder Geräten für einen Ackerschlepper oder ein landwirtschaftliches Zugfahrzeug, wobei die Liftarme jeweils mit einer Unterstützungs-Strebe (22) ausgestattet sind, die mittels eines Schwenkbolzens (21) mit einem verschwenkenden Schwenkarm (15), der an einem Bügel, Halter oder einem Ausleger (13) montiert ist, welcher gegenüber dem Ackerschlepper oder dem Zugfahrzeug gesichert ist, verbunden ist, wobei der Schwenkarm (15) mit einer Stopp-Scheibe (18) in Wechselwirkung tritt, die manuell einstellbar ist zwischen einer festgesetzten oder verriegelten Position, in der ein Stopp-Element (19) den Effekt einer lateralen Stabilisierung eines Gerätes, Instruments oder Werkzeugs hat, welches zwischen den Liftarmen verbunden ist, gegenüber einer Bewegung weg von der zentralen Position, und einer nicht festgesetzten oder nicht verriegelten Position, in der ein zweiter Stopp (20) die laterale Stabilisierung des Geräts, Instruments oder Werkzeugs aufhebt, wobei der Stopp (19) in der verriegelten Position ein Gerät, Instrument oder Werkzeug stabilisiert, welches von den Liftarmen getragen ist, gegenüber einer Bewegung aus der zentralen Position in sämtliche vertikalen Positionen und wobei für den Stopp (20) in der nicht festgesetzten oder nicht verriegelten Position und für die Liftarme in der verringerten Position das Gerät, Instrument oder Werkzeug nicht stabilisiert ist, aber in einer vollständig angehobenen Position der Liftarme das Gerät, Instrument oder Werkzeug stabilisiert ist gegenüber einer Bewegung weg von der zentralen Position, **dadurch gekennzeichnet, dass** jede Unterstützungs-Strebe (22) eine Erweiterung (23a) aufweist, die sich aufwärts hinter den Schwenkbolzen (21) oder über diesen hinaus erstreckt, wobei die Erweiterung (23a) verbunden ist mit einer Verbindung oder einem Gelenk (28; 31), dass die Verbindung oder das Gelenk (28; 31) eine erste Anordnung oder Formation (28a; 31 a) besitzt, welche in Wechselwirkung tritt mit einer zweiten Anordnung oder Formation (29; 32) oder in diese eingreift, die gegenüber dem Bügel, Halter oder dem Ausleger gesichert ist, und dass bei Verschwenkung der Stopp-Scheibe (18) in die nicht festgesetzte oder nicht verriegelte Position bei einer vorgegebenen Anhebe-Höhe der Liftarme (5) und für die Unterstützungs-Streben (22) unterhalb der vollständig angehobenen Position ein Stopp (28b; 31 b), der auf oder an der Verbindung oder dem Gelenk (28; 31) gebildet ist, in Kontakt kommt mit der zweiten Anordnung oder Formation (29; 32) zwecks Stabilisierung des Geräts, Instruments oder Werkzeugs gegenüber einer Bewegung aus der zentralen Position.

2. Einrichtung nach Anspruch 1, **dadurch gekennzeichnet, dass** jede Unterstüzungs-Strebe (22) aus einem Schwenk-Teil (23) und einer Stange (24) besteht, wobei der Schwenk-Teil (23) mit dem Schwenkarm (15) montiert ist mittels eines ersten zylindrischen Schwenkbolzens (21), und wobei die Stange (24) mit dem Schwenkteil (23) verbunden ist mittels eines zweiten zylindrischen Schwenkbolzens (25), wobei die Schwenkbolzen (21; 25) ein Kreuzgelenk oder eine Kreuzfuge bilden.

3. Einrichtung nach Anspruch 1 oder 2, **dadurch gekennzeichnet, dass** die erste Anordnung oder Formation (28a; 31 a) in der Verbindung oder dem Gelenk (28; 31) gebildet ist als ein sich in Längsrichtung erstreckender Schlitz, welcher die zweite Anordnung oder Formation (29; 32) in der Form eines Pins, der auf oder an dem Ausleger, Bügel oder Halter (13) montiert ist, empfängt, wobei der Pin ein Ende 28b des Schlitzes kontaktiert zur Stabilisierung des Geräts, Instruments oder Werkzeugs.

4. Einrichtung nach Anspruch 3, **dadurch gekennzeichnet, dass** der Schlitz (28a; 31a) in der Verbindung oder dem Gelenk (28, 31) mit einem viereckigen Querschnitt gebildet ist und dass ein Kontaktblock (33), der einen viereckigen Querschnitt besitzt, verdrehbar auf oder mit dem Pin (29; 32) montiert ist und in dem Schlitz (28a; 31 a) gleitet.

## Revendications

1. Dispositif pour la stabilisation latérale des deux bras de levage (5) des liaisons de montage d'équipement (2) d'un tracteur agricole, dans lequel les bras de levage comportent chacun une entretoise de support (22) qui est reliée par un axe de pivot (21) à un bras de pivot pivotant (15) monté sur un gousset (13) fixé au tracteur, le bras de pivot (15) coopérant avec un disque de butée (18), qui est réglable manuellement entre une position verrouillée, dans laquelle un premier élément de butée (19) a l'effet de stabilisation latérale d'un accessoire connecté entre les bras de levage contre un mouvement d'éloignement par rapport à une position centrale, et une position déverrouillée dans laquelle une deuxième butée (20) suspend la stabilisation latérale de l'accessoire, et dans lequel, avec la butée (19) dans la position verrouillée, un accessoire porté par les bras de levage est stabilisé contre un mouvement à partir de la position centrale dans toutes les positions verticales, et, avec la butée (20) dans la position déverrouillée et les bras de levage dans une position abaissée, l'accessoire n'est pas stabilisé mais, dans une position complètement relevée des bras de levage, l'accessoire est stabilisé contre un mouvement d'éloignement par rapport à la position centrale,
**caractérisé en ce que** chaque entretoise de support (22) comporte un prolongement (23a) qui s'étend vers l'extérieur au-delà de l'axe de pivot (21) et le prolongement (23a) est relié à une biellette (28 ; 31), **en ce que** la biellette (28 ; 31) possède une première formation (28a ; 31a) qui est en prise avec une deuxième formation (29, 32) fixée au gousset, et **en ce que**, avec le disque de butée (18) pivoté dans la position déverrouillée, à une hauteur de levage prédéterminée des bras de levage (5) et des entretoises de support (22) au-dessous de la position complètement relevée, une butée (28b ; 31b)) formée sur la biellette (28 ; 31) vient en contact avec la deuxième formation (29, 32), stabilisant ainsi l'accessoire contre des mouvements en dehors de la position centrale.

2. Dispositif selon la revendication 1, **caractérisé en ce que** chaque entretoise de support (22) est constituée d'une partie pivot (23) et d'une tige (24), dans lequel la partie pivot (23) est montée sur le bras de pivot (15) au moyen d'un premier axe de pivot cylindrique (21), et la tige (24) est connectée à la partie pivot (23) au moyen d'un deuxième axe de pivot cylindrique (25), et les axes de pivot (21 ; 26) forment une articulation croisée.

3. Dispositif selon la revendication 1 ou 2, **caractérisé en ce que** la première formation (28a ; 31a) de la biellette (28 ; 31) est constituée par une rainure s'étendant longitudinalement qui reçoit à l'intérieur la deuxième formation (29 ; 32) constituée par une broche montée sur le gousset (13) et la broche vient en contact contre une extrémité (28b) de la rainure pour stabiliser l'accessoire.

4. Dispositif selon la revendication 3, **caractérisé en ce que** la rainure (28a ; 31a) dans la biellette (28, 31) est formée à une section transversale carrée, et un bloc de contact (33) de section transversale carrée est monté de façon tournante sur la broche (29 ; 32) et coulisse dans la rainure (28a ; 31a).
